# EUROPEAN PATENT SPECIFICATION

(11) **EP 3 933 138 B1**
(45) Date of publication and mention of the grant of the patent: **15.04.2026**
(21) Application number: 21183761.2
(22) Date of filing: 05.07.2021
(51) Int. Cl.: E04D 15/00, H02S 20/22

(54) **A METHOD OF ALIGNING SOLAR PANELS AND A DEVICE FOR ALIGNING SOLAR PANELS**
VERFAHREN ZUM AUSRICHTEN VON SOLARPANEELEN UND VORRICHTUNG ZUM AUSRICHTEN VON SOLARPANEELEN
PROCÉDÉ ET DISPOSITIF D'ALIGNEMENT DE PANNEAUX SOLAIRES

(30) Priority: 03.07.2020 NL 2026001
(43) Date of publication of application: 05.01.2022
(73) Proprietor: Tinteq Holding B.V., 3704 GS Zeist (NL)
(72) Inventor: BEEKMANN, Jasper, 3704 GS Zeist (NL)
(74) Representative: IP Maison

(56) References cited:
- EP-A1- 2 253 773
- WO-A1-2010/142581
- JP-A- 2013 045 827
- US-A- 4 397 125
- US-A- 4 850 114
- US-A- 5 675 942
- US-A1- 2003 070 368
- US-A1- 2012 234 377
- US-A1- 2017 194 896
- US-B1- 6 394 518

## Description

The present invention relates to a method of aligning solar panels, said solar panels having
- a first side, and a second side opposite of said first side, and
- a third side and a fourth side, both sides extending from the first side to the second side,
wherein with a first solar panel and a second solar panel mounted on a support structure wherein a first side and a second side of the first solar panel and the second solar panel face each other, a third solar panel is mounted on the support structure, and a device is used to align a side of the third solar panel with a side of at least one of the first solar panel and second solar panel.

In order to generate solar energy, a group of solar panels can be mounted on an inclined slope, e.g. a roof of a building. A device may be used to maintain an even distance between adjacent solar panels. Although in such a group solar panels are typically of the same type, the solar panels can nevertheless differ slightly in size. These differences may add up when the solar panels are placed, resulting in unsightly staggering.

US2017194896A1 discloses clamps used to assemble photovoltaic (PV) arrays with frameless PV modules. The clamp includes a clamp cover configured to fit within a clamp grip, such that when the clamp cover is fitted to the clamp grip, pockets are formed to receive portions of PV modules. A base of the clamp cover may include one or more legs that act as a stop to prevent over tightening the clamp.

US8404968B2 discloses a photovoltaic power generating system including a solar cell module, an installation platform for holding a pair of ends of the solar cell module, and at least one supporting member disposed on a side of a non-light-receiving surface of the solar cell module, wherein the supporting member is disposed at such a distance from the non-light-receiving surface of the solar cell module that the supporting member can abut against the non-light-receiving surface by deformation of the solar cell module.

JP2013045827A discloses a reusable device for aligning solar panels.

The object of the present invention is to provide a method of aligning solar panels more evenly. To this end, a method according to claim 1 is provided.

Thus a method is provided that facilitates the alignment of the solar panels when a group of solar panels is mounted, for example using visual alignment where the device facilitates the positioning of the third solar panel.

The resilient stop may e.g. be a continuous ridge. Alternatively, the resilient stop may be in the form of a multitude of aligned protrusions. Due to the resilient properties of the resilient stop, size differences between solar panels can be compensated instead of being propagated, resulting in a better alignment of the solar panels. Furthermore, the resilient property of the resilient stop facilitates the removal of the device after the third solar panel has been fixed to the support structure in order to reuse the strip.

A suitable length of the resilient stop is 50-300 cm, and the device typically will have the same length.

A suitable resilience is dependent on the design of the resilient stop, the material used and other parameters. A suitable resilience is one where the resilient stop is compressible over 1 mm with a weight between 2 and 25 kg, per meter length of the stop, preferably between 4 and 15 kg per meter length of the resilient stop.

The method will typically involve mounting at least one further solar panel (fourth solar panel, fifth solar panel etc.) in a two-dimensional array using the device for alignment.

According to a favourable embodiment,
- the strip is placed with the first main side on both the first and second solar panel, with the resilient stop extending along at least
   part of the length of the third side of the first solar panel and along at least part of the length of the third side of the second solar panel, and
- with the resilient stop contacting i) the third sides of the first and second solar panel, and ii) the fourth side of the third solar panel, fixing the third solar panel to the support structure.

Thus the need for visual alignment is reduced or is absent.

According to a favourable embodiment, the resilient stop is located on the first main side at a longitudinal edge of the strip. In this way, the third solar panel is easily placed contacting the resilient stop, leaving the workspace for placing the third solar panel unencumbered.

According to a favourable embodiment, the strip has a length of at least 90 cm, preferably at least 125 cm.

The solar panels are produced in various dimensions, e.g. 0.8 m x 1.5 m, 1.65 m x 1 m or 2 x 1 m. A strip having such a preferred length can be used to align sides of solar panels with various dimensions.

According to a favourable embodiment, the resilient stop is made out of a rubber.

Rubber is easily shaped and cheaply produced. Furthermore, rubber does not slide easily over a surface, which facilitates the handling of the device on e.g. an angled part of a roof. It can e.g. be put aside or tossed with a low risk of falling of the roof. It is also unlikely to cause damage to a panel.

According to a favourable embodiment, the strip is made of a rubber.

Rubber is easily shaped and cheaply produced, and the device can be manufactured easily, for example using extrusion. This allows for the manufacture of the resilient stop together with the strip as an integral part of the device. Furthermore, rubber does not slide easily over a surface, which facilitates the handling of the device on e.g. an angled part of a roof. It can e.g. be put aside or tossed with a low risk of falling of the roof. It is also unlikely to cause damage to a panel.

According to a favourable embodiment, the resilient stop comprises a lumen with a centerline extending in the longitudinal direction of the device.

This makes the device even easier to remove after fixing the third solar panel. The lumen may be the lumen of a through-hole, or the resilient stop may be U-shaped, with one leg of the U connected to the strip and the other leg not connected to the strip.

According to a favourable embodiment, the resilient stop is a first resilient stop and the device comprises a second resilient stop, which is provided in a longitudinal direction on a side chosen from i) the second main side and ii) a strip side, said second resilient stop - extending in a direction transverse to facing away from a plane defined by the first main side,
- having a first contact side and a second contact side extending parallel to the first contact side.

Thus a second resilient stop is provided, which may be identical to the first resilient stop as a convenience for the user aligning solar panels, as the strip is always with a suitable main side as the first main side down. According to an alternative embodiment, the second resilient stop may have different properties with respect to compressibility and/or width, the latter allowing alignment with different fixed distance between adjacent panels.

As an optional step, the device may be removed after the third solar panel has been fixed to the support structure. As such, a space may be left behind between solar panels where the device was located, to for example accommodate thermal expansion of adjacent solar panels.

In general, being fixed to the support structure may imply being fixed to the first solar panel, when the first solar panel is fixed to the support structure.

The device may be generally reusable. As such, during its normal use, the device may not be plastically deformed, penetrated, or otherwise damaged which would prevent the device from being use again.

Finally, the present invention relates to a device for aligning solar panels according to claim 11.

Such a strip is suitable for use in the method according to the invention.

The invention also relates to any embodiments as discussed above for the method claims in any combination, repetition of which has been abstained from for reasons of brevity only.

The present invention will now be illustrated with reference to the drawing where
Fig. 1A shows a roof to be provided with an array of aligned solar panels;
Fig. 2A and Fig. 2B show a top view of a device according to the invention in top view and cross-sectional view respectively;
Fig. 3 shows a cross-sectional view through two solar panels and the device of Fig. 2B; and
Fig. 4 shows cross-sectional views of different embodiments of the device according to the invention.

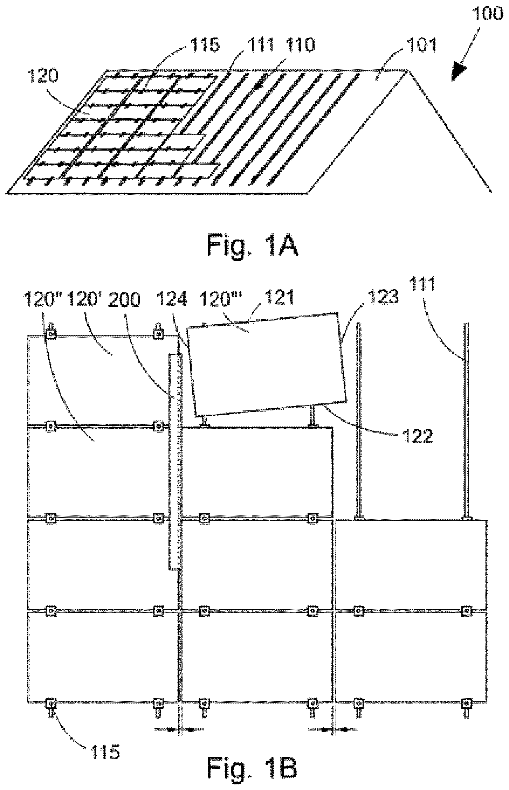

Fig. 1A shows an inclined roof 101 of a building 100 (partially shown) to be provided with an array of aligned solar panels 120. The roof 101 is provided with a support structure 110, here in the form of profiles 111 for mounting the solar panels 120 with clamps 115 as is known in the art.

Fig. 1B shows an array of solar panels 120 during mounting thereof, and in addition the profiles 111. A solar panel has a first side 121, a second side 122 opposite of the first side 121, a third side 123 and a fourth side 124 both extending from the first side 121 to the second side 122.

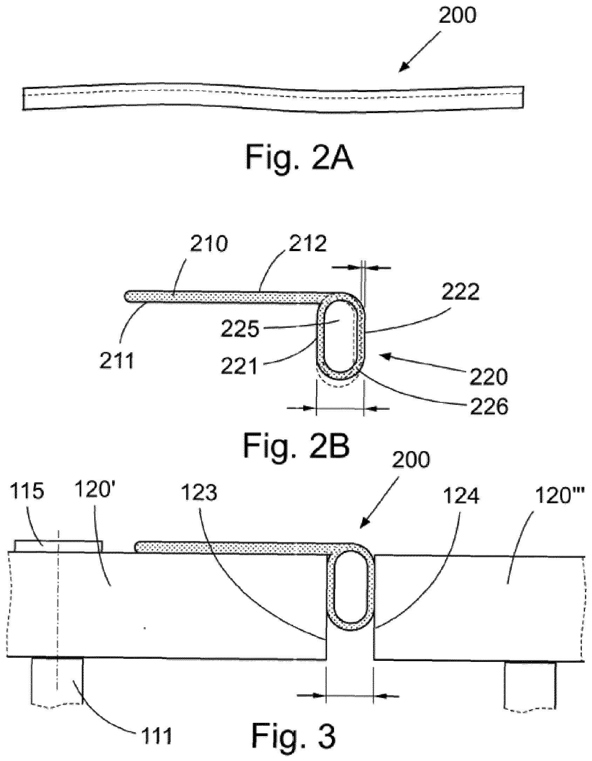

Fig. 2A and Fig. 2B show a top view of a device 200 according to the invention in top view and cross-sectional view respectively. The device 200 a body 210 in the form of a strip 210, said strip 210 having a first main side 211 and a second main side 212. At the first main side 211 the device comprises a resilient stop 220 having a first contact side 221 and a second contact side 222. In general, throughout the present disclosure, the device may be optionally referred to as a strip.

In the embodiment discussed here, the device 200 is made of rubber as a resilient material, and the stop 220 comprises a lumen 225 defined by a wall 226 having a thickness that is relatively small compared to the thickness of the strip 210, allowing the strip 210 to be relatively rigid and the stop 220 relatively compressible.

Fig. 3 shows a cross-sectional view through a (first) solar panel 120', a (third) solar panel 120"' and the device 200 of Fig. 2B in a state where the stop 220 is with its first contact side 221 in contact with the third side of the (first) solar panel 120' and with its second contact side 222 in contact with the fourth side of the (third) solar panel 120"', right before fixing the (third) solar panel 120"'.

In Fig. 1B the device 200 is visible, spanning the gap between the (first) solar panel 120', and the (second) solar panel 120". Thus the (third) solar panel 120"' can be aligned, with the resilient stop allowing alignment with accommodation for minor dimensional differences between panels 120.

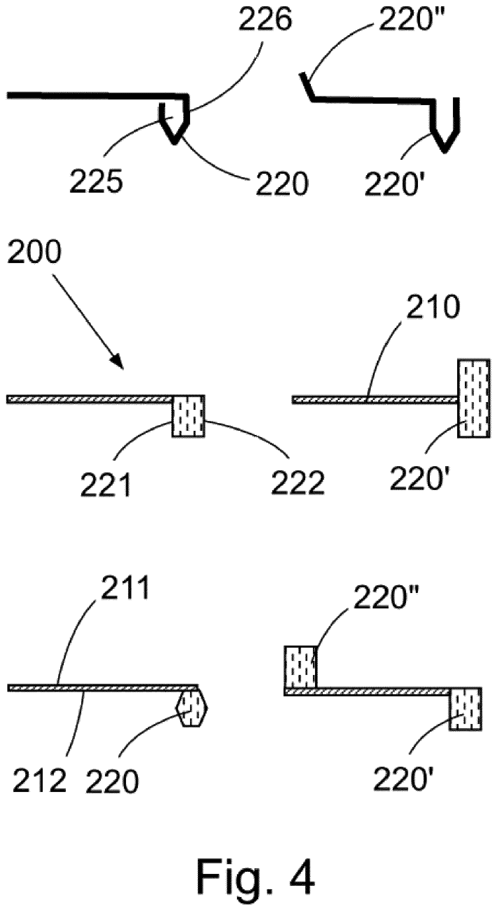

Fig. 4 shows cross-sectional views of six different embodiments of the device 200 according to the invention. The ones on the left have a single resilient stop 220, whereas the ones on the right have two resilient stops 220 (first stop 220' en second stop 220"). In the embodiment in the bottom right the width of the resilient stops 220 is different, allowing the user to select a width most suitable for the required spacing distance between the solar panels.

In the two embodiments at the top, the body 210 and the resilient stop 220 of the device are made of the same material, for example made using extrusion. In an alternative embodiment not shown here, the body 210 and the resilient stop 220 display different characteristics due to the difference in thickness of the body 210 and the wall 226.

In the four embodiments in the middle and bottom rows, the body 210 and the resilient stop 220 of the device are made of the different material, for example using co-extrusion. This allows the resilient stop to be made of a relatively soft material. In the embodiments in the middle row, the resilient stop 220 is attached to the longitudinal side of the body 210.

In the two embodiments in the bottom row, at least one of the main sides is provided with a stop 220, which may benefit the longevity of the device.

The design of the stop 220 may chosen to provide a desired (non-linear) resilience behaviour (bottom left).

In particular, the stop 220 may be arranged such that, when the first contact side 221 and the second contact side 220 are compressed towards each other, the resilient stop 220 first exhibits a first stiffness against compression, followed by a second stiffness against compression.

The first stiffness may for example be at least partially determined by an elastic deformation of a cross-sectional shape of the stop 220, as for example shown in Fig. 4. For example, the stop 220 may collapse inside a lumen 250 or open space between the first contact side and the second contact side, due to the compression of the first contact side 221 and the second contact side 220 towards each other. The lumen 250 or other open space may be filled with air, or another material for example with a lower stiffness against compression than the material comprised by the stop.

The second stiffness may be at least partially, mainly, of fully determined by a stiffness against compression of the material comprised by the stop 220 and a thickness of said material in the compression direction.

By virtue of the different stiffnesses, in use, the stop 220 may first be compressed in the first stiffness range when positioning adjacent solar panels with the stop 220 in-between. The stop 220 may be compressed in the second stiffness range when removing the stop 220, leaving behind an empty space.

The different stiffness ranges - i.e. the non-linear resilience behaviour of the stop 220 - may be achieved for example by using different materials, a cross-sectional shape of the stop 220 as for example shown in Fig. 4, leaving vacant an opening or lumen 250, any other way, or any combination thereof.

In the four embodiments shown in the top row and the bottom row the resilient stops 220 are at a main side and at a longitudinal edge of the strip as this allows a worker to have a good access to and a clear view on the third solar panel to be mounted.

The method and device may be varied within the scope of the appended claims. For example, the device may be provided with a grip to facilitate picking up the device.

A particular embodiment of the method of aligning solar panels, with which any option disclosed herein may be combined, comprises the steps of:
- placing a strip with a first main side on a first solar panel;
- positioning a resilient stop of the strip adjacent to a third side of the first solar panel,
- positioning a third solar panel on a support structure at a location with its fourth side facing a second contact side of the resilient stop, and
- with the first contact side of the resilient stop contacting the third side of the first solar pane, and the second contact side of the resilient stop contacting the fourth side of the third solar panel, fixing the third solar panel to the support structure.

After the third solar panel is fixed to the support structure, the strip may be removed leaving behind a spacing between the first solar panel and the third solar panel.

In use, the first solar panel may be positioned adjacent to the third solar panels. Furthermore, in use, in general for any solar panel described herein, the first side of a solar panel may be a top side, a second side of the solar panel may be a bottom side, a third side of a solar panel may be a right side, and the fourth side of the solar panel may be a left side. As such, in the method, the strip may be positioned between right side of a first solar panel and the left side of a third solar panel.

As an option in any of the method, during the positioning of the third solar panel on the support structure at a location with its fourth side facing the second contact side of the resilient stop, the resilient stop may be at least partially deformed, in particular elastically deformed. The deformation may be the result of the third solar panel compressing the first contact side and the second contact side together, because the desired spacing between the third solar panel and the first solar panel is smaller than the space occupied by the stop in uncompressed state.

## Claims

1. A method of aligning solar panels (120), said solar panels (120) having
- a first side (121), and a second side (122) opposite of said first side (121), and
- a third side (123) and a fourth side (124), both sides extending from the first side (121) to the second side (122),
wherein with a first solar panel (120') and a second solar panel (120") mounted on a support structure (110) wherein a first side (121) and a second side (122) of the first solar panel (120') and the second solar panel (120") face each other, a third solar panel (120"') is mounted on the support structure (110), and a device is used to align a side of the third solar panel (120'") with a side of the first solar panel (120');
**characterized in that** a reusable elongated device (200) is used for alignment of the solar panels (120), said device (200) comprising
- a strip (210), said strip (210) having
- a first main side (211), a second main side (212), and strip sides extending between the first main side (211) and the second main side (212) and
- a resilient stop (220), which is provided in a longitudinal direction on the first main side (211), said resilient stop (220) configured to facilitate the removal of the device after a third solar panel has been fixed to the support structure; and said resilient stop:
- extending in a direction transverse to and facing away from a plane defined by the second main side (212),
- having a first contact side (221), and
- having a second contact side (222) extending parallel to the first contact side (221);
wherein the method comprises the steps of
- placing the strip (210) with the first main side (211) on the first solar panel (120'),
- positioning the resilient stop (220) adjacent to the third side (123) of the first solar panel (120'),
- positioning the third solar panel (120"') on the support structure (110) at a location with its fourth side (124) facing the second contact side (222) of the resilient stop (220),
- with i) the first contact side (221) of the resilient stop (220) contacting the third side (123) of the first solar panel (120'), and ii) the second contact side (222) of the resilient stop (220) contacting the fourth side (124) of the third solar panel (120"'), fixing the third solar panel (120"') to the support structure (110); and
- removing the elongated device (200) after the third solar panel has been fixed to the support structure;
**characterised in that** the stop 220 is arranged such that, when the first contact side 221 and the second contact side 220 are compressed towards each other, the resilient stop 220 first exhibits a first stiffness against compression, followed by a second stiffness against compression to provide a non-linear resilience behaviour.

2. The method according to claim 1, wherein
- the strip (210) is placed with the first main side (211) on both the first and second solar panel (120"), with the resilient stop (220) extending along at least part of the length of the third side (123) of the first solar panel (120') and along at least part of the length of the third side (123) of the second solar panel (120"), and
- with the resilient stop (220) contacting i) the third sides of the first and second solar panel (120"), and ii) the fourth side (124) of the third solar panel (120"'), fixing the third solar panel (120"') to the support structure (110).

3. The method according to claim 1 or 2, wherein the resilient stop (220) is located on the first main side (121) at a longitudinal edge of the strip (210).

4. The method according to any of the preceding claims, wherein the strip (210) has a length of at least 90 cm, preferably at least 125 cm.

5. The method according to any of the preceding claims, wherein the resilient stop (220) is made out of a rubber.

6. The method according to any of the preceding claims, wherein the strip (210) is made of a rubber.

7. The method according to any of the preceding claims, wherein the resilient stop (220) comprises a lumen (225) with a centreline extending in the longitudinal direction of the device (200).

8. The method according to any of the preceding claims, wherein the resilient stop (220) is a first resilient stop (220') and the device (200) comprises a second resilient stop (220"), which is provided in a longitudinal direction on a side chosen from i) the second main side (212) and ii) a strip side, said second resilient stop (220")
- extending in a direction transverse to facing away from a plane defined by the first main side (211),
- having a first contact side (221) and a second contact side (222) extending parallel to the first contact side (221).

9. The method according to any of the preceding claims, wherein the strip and the resilient stop are made of a rubber.

10. The method according to claim 9, further comprising a step of reusing the device after the removal of the device.

11. A reusable device (200) for aligning solar panels (120), **characterized in that**
- a strip (210), said strip (210) having
- a first main side (211),
- a second main side (212), and
- a resilient stop (220), configured to facilitate the removal of the device after a third solar panel has been fixed to the support structure, which resilient stop is provided in a longitudinal direction on the first main side (211), said resilient stop (220)
- extending in a direction transverse to and facing away from a plane defined by the second main side (212),
- having a first contact side (221), and
- having a second contact side (222) extending parallel to the first contact side (221) **characterised in that** the stop 220 is arranged such that, when the first contact side 221 and the second contact side 220 are compressed towards each other, the resilient stop 220 first exhibits a first stiffness against compression, followed by a second stiffness against compression to provide a non-linear resilience behaviour.

12. The device according to claim 11, wherein the resilient stop (220) comprises a lumen (225) with a centreline extending in the longitudinal direction of the device (200).

13. The device according to any of the claims 11-12, wherein the device is made of rubber, wherein the resilient stop is manufactured together with the strip as an integral part of the device.

14. The device according to any of the claims 11-12, wherein the strip and the resilient stop are made of a rubber.

## Patentansprüche

1. Verfahren zum Ausrichten von Solarpaneelen (120), wobei die Solarpaneele (120) haben
- eine erste Seite (121) und eine der ersten Seite (121) entgegengesetzte zweite Seite (122) und
- eine dritte Seite (123) und eine vierte Seite (124), welche Seiten sich beide von der ersten Seite (121) zu der zweiten Seite (122) hin erstrecken,
wobei, wenn ein erstes Solarpaneel (120') und ein zweites Solarpaneel (120") so auf einer Trägerstruktur (110) angebracht sind, dass eine erste Seite (121) und eine zweite Seite (122) des ersten Solarpaneels (120') und des zweiten Solarpaneels (120") zueinander weisen, ein drittes Solarpaneel (120"') an der Trägerstruktur (110) angebracht wird und eine Vorrichtung verwendet wird, um eine Seite des dritten Solarpaneels (120''') gegenüber einer Seite des ersten Solarpaneels (120') auszurichten;
**dadurch gekennzeichnet, dass** für das Ausrichten der Solarpaneele (120) eine wiederverwendbare längliche Vorrichtung (200) verwendet wird, wobei diese Vorrichtung (200) aufweist
- einen Streifen (210), wobei der Streifen (210) hat
- eine erste Hauptseite (211), eine zweite Hauptseite (212) und Streifenseiten, die sich zwischen der ersten Hauptseite (211) und der zweiten Hauptseite (212) erstrecken, und
- einen elastischen Anschlag (220), der in einer Längsrichtung an der ersten Hauptseite (211) bereitgestellt ist, wobei der elastische Anschlag (220) ausgelegt ist, ein Entfernen der Vorrichtung zu erleichtern, nachdem ein drittes Solarpaneel an der Trägerstruktur befestigt wurde; und wobei der elastische Anschlag:
- sich in einer Richtung erstreckt, die quer zu einer Ebene verläuft, die durch die zweite Hauptseite (212) begrenzt wird, und von dieser Ebene wegweist,
- eine erste Kontaktseite (221) hat und
- eine zweite Kontaktseite (222) hat, die sich parallel zur ersten Kontaktseite (221) erstreckt;
wobei das Verfahren die Schritte aufweist:
- Anordnen des Streifens (210) mit der ersten Hauptseite (211) auf dem ersten Solarpaneel (120'),
- Anordnen des elastischen Anschlags (220) neben der ersten Seite (123) des ersten Solarpaneels (120'),
- Anordnen des dritten Solarpaneels (120''') auf der Trägerstruktur (110) an einer Stelle, an der seine vierte Seite (124) zur zweiten Kontaktseite (222) des elastischen Anschlags (220) weist,
- wobei i) die erste Kontaktseite (221) des elastischen Anschlags (220) die dritte Seite (123) des ersten Solarpaneels (120') berührt und ii) die zweite Kontaktseite (222) des elastischen Anschlags (220) die vierte Seite (124) des dritten Solarpaneels (120''') berüht, und Befestigen des dritten Solarpaneels (120''') an der Trägerstruktur (110); und
- Entfernen der länglichen Vorrichtung (200), nachdem das dritte Solarpaneel an der Trägerstruktur befestigt wurde;
**dadurch gekennzeichnet, dass** der Anschlag (220) eingerichtet ist, dass, wenn die erste Kontaktseite (221) und die zweite Kontaktseite (220) zueinander gedrückt werden, der elastische Anschlag (220) zunächst eine erste Steifigkeit gegenüber dem Zusammendrücken zeigt und sodann eine zweite Steifigkeit gegenüber dem Zusammendrücken zeigt, um so ein nicht-lineares Elastizitätsverhalten bereitzustellen.

2. Verfahren gemäß Anspruch 1, wobei
- der Streifen (210) mit der ersten Hauptseite (211) auf sowohl dem ersten als auch dem zweiten Solarpaneel (120") angeordnet wird, wobei sich der elastische Anschlag (220) längs zumindest einem Teil der Länge der dritten Seite (123) des ersten Solarpaneels (120') und längs zumindest einem Teil der Länge der dritten Seite (123) des zweiten Solarpaneels (120") erstreckt und
- wenn der elastische Anschlag (220) kontaktiert: i) die dritten Seiten des ersten und zweiten Solarpaneels (120") und ii) die vierte Seite (124) des dritten Solarpaneels (120"'), das Befestigen des dritten Solarpaneels (120''') an der Trägerstruktur (110) erfolgt.

3. Verfahren gemäß Anspruch 1 oder 2, wobei der elastische Anschlag (220) auf der ersten Hauptseite (121) an einer Längskante des Streifens (210) angeordnet ist.

4. Verfahren gemäß einem der vorhergehenden Ansprüche, wobei der Streifen (210) eine Länge von mindestens 90 cm und vorzugsweise mindestens 125 cm hat.

5. Verfahren gemäß einem der vorhergehenden Ansprüche, wobei der elastische Anschlag (220) aus Gummi hergestellt ist.

6. Verfahren gemäß einem der vorhergehenden Ansprüche, wobei der Streifen (210) aus Gummi hergestellt ist.

7. Verfahren gemäß einem der vorhergehenden Ansprüche, wobei der elastische Anschlag (220) einen Hohlraum (225) mit einer mittleren Verlaufslinie, die sich in der Längsrichtung der Vorrichtung (200) erstreckt, aufweist.

8. Verfahren gemäß einem der vorhergehenden Ansprüche, wobei der elastische Anschlag (220) ein erster elastischer Anschlag (220') ist und die Vorrichtung (200) eine zweiten elastischen Anschlag (220") aufweist, der in einer Längsrichtung auf einer Seite bereitgestellt ist, die ausgewählt ist aus i) der zweiten Hauptseite (212) und ii) einer Streifenseite, wobei der zweite elastische Anschlag (220")
- sich in einer Richtung erstreckt, die quer zu einer Richtung ist, die von einer Ebene, die durch die erste Hauptseite (211) begrenzt ist, wegweist,
- eine erste Kontaktseite (221) hat und eine zweite Kontaktseite (222), die sich parallel zu der ersten Kontaktseite (221) erstreckt.

9. Verfahren gemäß einem der vorhergehenden Ansprüche, wobei der Streifen und der elastische Anschlag aus Gummi hergestellt sind.

10. Verfahren gemäß Anspruch 9, weiter aufweisend einen Schritt des Wiederverwendens der Vorrichtung nach dem Entfernen der Vorrichtung.

11. Wiederverwendbare Vorrichtung (200) zum Ausrichten von Solarpaneelen (120), **dadurch gekennzeichnet, dass**
- ein Streifen (210), wobei der Streifen (210) hat
- eine erste Hauptseite (211),
- eine zweite Hauptseite (212) und
- einen elastischen Anschlag (220), der eingerichtet ist, das Entfernen der Vorrichtung zu erleichtern, nachdem ein drittes Solarpaneel an der Trägerstruktur befestigt wurde, wobei der elastische Anschlag in einer Längsrichtung auf der ersten Hauptseite (211) bereitgestellt ist, wobei der elastische Anschlag (220)
- sich in einer Richtung erstreckt, die quer zu einer Ebene verläuft, die durch die zweite Hauptseite (212) begrenzt wird, und von dieser Ebene wegweist,
- eine erste Kontaktseite (221) hat und
- eine zweite Kontaktseite (222) hat, die sich parallel zur ersten Kontaktseite (221) erstreckt, **dadurch gekennzeichnet, dass**, wenn die erste Kontaktseite (221) und die zweite Kontaktseite (220) zueinander gedrückt werden, der elastische Anschlag (220) zunächst eine erste Steifigkeit gegenüber dem Zusammendrücken zeigt und sodann eine zweite Steifigkeit gegenüber dem Zusammendrücken zeigt, um so ein nicht-lineares Elastizitätsverhalten bereitzustellen.

12. Vorrichtung gemäß Anspruch 11, wobei der elastische Anschlag (220) einen Hohlraum (225) mit einer mittleren Verlaufslinie, die sich in der Längsrichtung der Vorrichtung (200) erstreckt, aufweist.

13. Vorrichtung gemäß einem der Ansprüche 11-12, wobei die Vorrichtung aus Gummi hergestellt ist, wobei der elastische Anschlag zusammen mit dem Streifen als integraler Bestandteil der Vorrichtung hergestellt ist.

14. Vorrichtung gemäß einem der Ansprüche 11-12, wobei der Streifen und der elastische Anschlag aus Gummi hergestellt sind.

## Revendications

1. Procédé d'alignement de panneaux solaires (120), lesdits panneaux solaires (120) présentant
- un premier côté (121), et un deuxième côté (122) opposé audit premier côté (121), et
- un troisième côté (123) et un quatrième côté (124), les deux côtés s'étendant à partir du premier côté (121) jusqu'au deuxième côté (122),
dans lequel, avec un premier panneau solaire (120') et un deuxième panneau solaire (120") montés sur une structure de support (110) dans lequel un premier côté (121) et un deuxième côté (122) du premier panneau solaire (120') et du deuxième panneau solaire (120") se font face, un troisième panneau solaire (120"') est monté sur la structure de support (110), et un dispositif est utilisé pour aligner un côté du troisième panneau solaire (120"') avec un côté du premier panneau solaire (120') ;
**caractérisé en ce qu'**un dispositif allongé réutilisable (200) est utilisé pour l'alignement des panneaux solaires (120), ledit dispositif (200) comprenant
- une bande (210), ladite bande (210) présentant
- un premier côté principal (211), un deuxième côté principal (212), et des côtés de bande s'étendant entre le premier côté principal (211) et le deuxième côté principal (212) et
- une butée élastique (220), qui est ménagée dans une direction longitudinale sur le premier côté principal (211), ladite butée élastique (220) étant configurée pour faciliter le retrait du dispositif après la fixation d'un troisième panneau solaire à la structure de support ; et ladite butée élastique :
- s'étendant dans une direction transversale et orientée à l'opposé d'un plan défini par le deuxième côté principal (212),
- présentant un premier côté de contact (221), et
- présentant un deuxième côté de contact (222) s'étendant parallèlement au premier côté de contact (221) ;
dans lequel le procédé comprend les étapes consistant à
- placer la bande (210) avec le premier côté principal (211) sur le premier panneau solaire (120'),
- positionner la butée élastique (220) adjacente au troisième côté (123) du premier panneau solaire (120'),
- positionner le troisième panneau solaire (120"') sur la structure de support (110) à un emplacement avec son quatrième côté (124) faisant face au deuxième côté de contact (222) de la butée élastique (220),
- avec i) le premier côté de contact (221) de la butée élastique (220) en contact avec le troisième côté (123) du premier panneau solaire (120'), et ii) le deuxième côté de contact (222) de la butée élastique (220) en contact avec le quatrième côté (124) du troisième panneau solaire (120"'), fixer le troisième panneau solaire (120"') à la structure de support (110) ; et
- retirer le dispositif allongé (200) après la fixation du troisième panneau solaire à la structure de support ;
**caractérisé en ce que** la butée 220 est disposée de telle sorte que, lorsque le premier côté de contact 221 et le deuxième côté de contact 220 sont comprimés l'un vers l'autre, la butée élastique 220 présente d'abord une première rigidité à la compression, suivie d'une deuxième rigidité à la compression, de façon à offrir un comportement élastique non-linéaire.

2. Procédé selon la revendication 1, dans lequel
- la bande (210) est placée avec le premier côté principal (211) sur le premier et sur le deuxième panneau solaire (120"), avec la butée élastique (220) s'étendant le long d'au moins une partie de la longueur du troisième côté (123) du premier panneau solaire (120') et le long d'au moins une partie de la longueur du troisième côté (123) du deuxième panneau solaire (120"), et
- avec la butée élastique (220) en contact i) avec les troisièmes côtés des premier et deuxième panneaux solaires (120"), et ii) avec le quatrième côté (124) du troisième panneau solaire (120"'), fixant le troisième panneau solaire (120"') à la structure de support (110).

3. Procédé selon la revendication 1 ou 2, dans lequel la butée élastique (220) est située sur le premier côté principal (121) au niveau d'un bord longitudinal de la bande (210).

4. Procédé selon l'une des revendications précédentes, dans lequel la bande (210) présente une longueur d'au moins 90 cm, de préférence d'au moins 125 cm.

5. Procédé selon l'une des revendications précédentes, dans lequel la butée élastique (220) est réalisée en caoutchouc.

6. Procédé selon l'une des revendications précédentes, dans lequel la bande (210) est réalisée en caoutchouc.

7. Procédé selon l'une des revendications précédentes, dans lequel la butée élastique (220) comprend une lumière (225) avec une ligne centrale s'étendant dans la direction longitudinale du dispositif (200).

8. Procédé selon l'une des revendications précédentes, dans lequel la butée élastique (220) est une première butée élastique (220') et le dispositif (200) comprend une deuxième butée élastique (220"), qui est ménagée dans une direction longitudinale sur un côté choisi parmi i) le deuxième côté principal (212) et ii) un côté de bande, ladite deuxième butée élastique (220")
- s'étendant dans une direction transversale et orientée à l'opposé d'un plan défini par le premier côté principal (211),
- présentant un premier côté de contact (221) et un deuxième côté de contact (222) s'étendant parallèlement au premier côté de contact (221).

9. Procédé selon l'une des revendications précédentes, dans lequel la bande et la butée élastique sont réalisées en caoutchouc.

10. Procédé selon la revendication 9, comprenant en outre une étape de réutilisation du dispositif après le retrait du dispositif.

11. Dispositif réutilisable (200) pour l'alignement de panneaux solaires (120), **caractérisé par**
- une bande (210), ladite bande (210) présentant
- un premier côté principal (211),
- un deuxième côté principal (212), et
- une butée élastique (220), configurée pour faciliter le retrait du dispositif après la fixation d'un troisième panneau solaire à la structure de support, laquelle butée élastique est ménagée dans une direction longitudinale sur le premier côté principal (211), ladite butée élastique (220)
- s'étendant dans une direction transversale et orientée à l'opposé d'un plan défini par le deuxième côté principal (212),
- présentant un premier côté de contact (221), et
- présentant un deuxième côté de contact (222) s'étendant parallèlement au premier côté de contact (221) **caractérisé en ce que** la butée 220 est disposée de telle sorte que, lorsque le premier côté de contact 221 et le deuxième côté de contact 220 sont comprimés l'un vers l'autre, la butée élastique 220 présente d'abord une première rigidité à la compression, suivie d'une deuxième rigidité à la compression, de façon à offrir un comportement élastique non-linéaire.

12. Dispositif selon la revendication 11, dans lequel la butée élastique (220) comprend une lumière (225) avec une ligne centrale s'étendant dans la direction longitudinale du dispositif (200).

13. Dispositif selon l'une des revendications 11-12, dans lequel le dispositif est réalisé en caoutchouc, dans lequel la butée élastique est fabriquée d'un seul tenant avec la bande comme une partie intégrante du dispositif.

14. Dispositif selon l'une des revendications 11-12, dans lequel la bande et la butée élastique sont réalisées en caoutchouc.
